# EUROPÄISCHE PATENTANMELDUNG

(11) **EP 1 881 385 A1**
(43) Veröffentlichungstag der Anmeldung: **23.01.2008**
(21) Anmeldenummer: 07405177.2
(22) Anmeldetag: 20.06.2007
(51) Int. Cl.: G05B 19/418

(54) **System für einen Informationsaustausch zwischen einer Bearbeitungsmaschine und einer Übergabevorrichtung**

(30) Priorität: 18.07.2006 CH 11572006
(71) Anmelder: Erowa AG, CH-5734 Reinach (CH)
(72) Erfinder: Sandmeier, Bruno, 5707 Seengen (CH)
(74) Vertreter: Rottmann, Maximilian

(57) **Zusammenfassung**

Bei einem System für einen Informationsaustausch zwischen einer Bearbeitungsmaschine (1) und einer Übergabevorrichtung (11) zum Liefern von unbearbeiteten oder vorbearbeiteten Teilen oder Werkzeugen zu oder zum Holen der bearbeiteten Produkte oder von Werkzeugen von der Bearbeitungsmaschine (1) weist die Bearbeitungsmaschine (1) eine Steuerung (3) und eine Schnittstelle (4) auf, wobei die Steuerung (3) Bearbeitungszustände der Bearbeitungsmaschine (1) überwacht und steuert und über die Schnittstelle (4) Information über die Bearbeitungszustände der Bearbeitungsmaschine (1) zu der Übergabevorrichtung (11) zu deren Aktivierung ausgibt, welche Übergabevorrichtung (11) die Information über eine ihr zugeordnete Schnittstelle (14) empfängt und mittels einer ihr zugeordneten Steuerung (13) verarbeitet und auf die Information reagiert, wobei eine Druckerschnittstelle als die Schnittstelle (4) der Bearbeitungsmaschine (1) genutzt wird.

## Beschreibung

Die Erfindung betrifft ein System für einen Informationsaustausch zwischen einer Bearbeitungsmaschine, wie beispielsweise einer Drehmaschine, einer Fräsmaschine, einer Senkerodiermaschine, einer Schneiderodiermaschine, etc., und einer Übergabevorrichtung, wie beispielsweise einem Roboter, zum Liefern von unbearbeiteten oder vorbearbeiteten Teilen oder Werkzeugen zu oder zum Holen der bearbeiteten Produkte oder von Werkzeugen von der Bearbeitungsmaschine. Eine Übergabevorrichtung wird insbesondere dann eingesetzt, wenn keine Serienfertigung möglich ist, d.h. bei der Herstellung geringer Mengen von bearbeiteten Produkten, wobei oft verschiedene Teile zu bearbeiten sind, zu deren Bearbeitung auch unterschiedliche Werkzeuge nötig sein können.

Die Übergabevorrichtung führt einen Wechsel von Werkstücken und/oder Werkzeugen durch, wobei sichergestellt sein muss, dass die Übergabevorrichtung und die Bearbeitungsmaschine aufeinander abgestimmt und ihre jeweiligen Arbeitsabläufe synchronisiert sind. Sowohl die Bearbeitungsmaschine als auch die Übergabevorrichtung sind jeweils mit einer Steuerung zum Steuern ihrer jeweiligen Arbeitsvorgänge versehen, wobei die Steuerung der Bearbeitungsmaschine den Ablauf eines Bearbeitungsprozesses steuert. Zur sicheren und richtigen Zusammenarbeit der Bearbeitungsmaschine und der Übergabevorrichtung müssen deren jeweilige Steuerungen einen Austausch von Information bzw. Daten vornehmen. Dieser Informationsaustausch kann auf verschiedene Arten erfolgen. Die Übergabevorrichtung kann über ihre Steuerung Information an die Steuerung der Bearbeitungsmaschine übermitteln oder die Bearbeitungsmaschine kann über ihre Steuerung Information an die Steuerung der Übergabevorrichtung übermitteln. Entsprechend der übermittelten Information erfolgt dann eine Abstimmung und schrittweise Taktung der Bearbeitungsmaschine und der Übergabevorrichtung. Es ist aber auch möglich, ein übergeordnetes System zum Steuern der Bearbeitungsmaschine und der Übergabevorrichtung vorzusehen.

Hier soll der Fall betrachtet werden, in welchem die Bearbeitungsmaschine als sogenannter Master Information in Bezug auf durchgeführte Bearbeitungsvorgänge an die Übergabevorrichtung übermittelt, um dadurch die Übergabevorrichtung zu aktivieren. Dieser Fall wird in Praxis oft vorkommen, da es viele im Einsatz befindliche Bearbeitungsmaschine gibt, die durch eine Übergabevorrichtung ergänzt werden.

Ein Informationsaustausch bzw. eine Kommunikation zwischen den jeweiligen Steuerungen der Bearbeitungsmaschine und der Übergabevorrichtung erfolgt normalerweise über jeweilige Schnittstellen der Bearbeitungsmaschine und der Übergabevorrichtung. Damit eine Kommunikation zwischen den jeweiligen Steuerungen der Bearbeitungsmaschine und der Übergabevorrichtung ohne Schwierigkeiten funktioniert, müssen die jeweiligen Schnittstellen aneinander angepasst werden.

Das nächstliegende Dokument CH 681 397 A5 zeigt eine automatische Fabrikationsanlage mit numerisch gesteuerten Bearbeitungseinrichtungen und mit diesen zugeordneten Steuereinheiten, wobei Werkzeuge und Werkstücke in Magazinen gelagert sind und durch Handhabungsgeräte (Übergabevorrichtungen) zu und von den Bearbeitungseinrichtungen übergeben werden und dort, montiert auf einheitlichen Trägern, positionsgerecht in die Bearbeitungseinrichtungen einspannbar sind. Die Träger sind mit elektronischen Datenträgern mit gespeicherten Daten zum Identifizieren der Werkzeuge und der Werkstücke und zum Steuern des Fertigungsablaufs in den Bearbeitungseinrichtungen versehen und die Daten sind durch zu den Handhabungsgeräten gehörende Datenverarbeitungsgeräte lesbar, die mit den Steuereinheiten der Bearbeitungseinrichtungen kommunikativ verbunden sind. Es ist eine allgemeine Schnittstelle zwischen einer Bearbeitungseinrichtung und einem Handhabungsgerät angegeben. Über diese Schnittstelle kann die Steuereinheit die Bezeichnung des benötigten Werkstücks aufrufen, woraufhin eine Übergabe erfolgt. Bei der Übergabe werden zur weiteren Bearbeitung eines Werkstücks die im Datenträger gespeicherten Daten zur Steuereinheit transferiert.

Das Dokument DE 39 38 950 A1 betrifft ein System zur numerisch gesteuerten Bearbeitung mit einer Gruppe von miteinander verbundenen NC-Maschinen, wobei Bearbeitungsprogramme zwischen den NC-Maschinen in dem System ausgetauscht und gemeinschaftlich angewendet werden. Dabei sind den NC-Maschinen Datenübertragungsschnittstellen beispielsweise in der Form einer RS 232 c-Schnittstelle für die Datenverbindung mit einem externen Gerät zugeordnet. Über diese werden Programmlade-Anforderungen von NC-Maschine zu NC-Maschine gesendet, woraufhin ein angefordertes Bearbeitungsprogramm aus einem Speicher ausgelesen und in eine ausgewählte NC-Maschine eingegeben wird. Dieses Dokument betrifft nicht das Übergeben von Werkstücken und/oder Werkzeugen, sondern das Übergeben von Bearbeitungsprogrammen zwischen NC-Maschinen.

Das Dokument DE 43 23 950 A1 betrifft ein Verfahren und eine Vorrichtung zum Steuern von Bewegungen und/oder Prozessen eines Werkzeugs, das von einem Manipulator entlang einer vorgegebenen Bahn geführt wird. Die Bewegungen und/oder Prozesse werden von einem Funktionsgenerator synchron gesteuert und dem Bahnvorschub überlagert. Die Funktionen der Bewegungen und/oder Prozesse werden in Funktionsabschnitten gleicher oder wenigstens proportionaler Größe eingegeben und zumindest zeitweise gespeichert. Nach einem Start erfolgt synchron eine wiederholte zyklische Ausführung der Funktionsabschnitte. Die Funktionsabschnitte werden aus Parametern berechnet, die zumindest für die Dauer eines Funktionsabschnitts gespeichert bleiben. Dieses Dokument betrifft somit das Synchronisieren von Bewegungen und/oder Prozessen eines Werkzeugs während eines Bearbeitungsvorgangs.

Das Dokument WO 98/44399 A2 betrifft ein Verfahren zur Programmierung eines sicherheitsgerichteten Steuerungssystems, wobei sicherheitsgerichtete steuerungstechnische Regeln zur Verknüpfung von Ein- und Ausgangssignalen in Form von Software-Makros in einer Station des Steuerungssystems abgelegt sind. Über ein Programmiergerät werden Befehle an die Station übertragen, über die in den Software-Makros zusammengestellte Befehlsfolgen zur Zuweisung von Ein- und Ausgangsinformationen aufgerufen werden. Dieses Dokument zeigt somit die Verwendung von Makros in Bezug auf eine (allgemeine) Steuerung.

Das Dokument US 6 145 020 A betrifft eine Mikrosteuerung. Dabei ist das Verwenden von Druckerschnittstellen als Schnittstellen (seriell und parallel; Centronics und RS-232C und RS-449) für das Anschliessen von peripheren (Steuerungs-)Vorrichtungen an die Mikrosteuerung angegeben.

Ausgehend vom nächstliegenden Dokument CH 681 397 A5 nach dem Stand der Technik zielt die Erfindung darauf ab, ein System für einen Informationsaustausch zwischen einer Bearbeitungsmaschine und einer Übergabevorrichtung zur Verfügung zu stellen, bei welchem der Informationsaustausch ohne Schwierigkeiten erfolgen kann und welches auch eine Nachrüstung einer Bearbeitungsmaschine durch eine Übergabevorrichtung ohne größeren Aufwand gestattet. Insbesondere soll eine Aktivierung einer Übergabevorrichtung auch bei einer Nachrüstung auf möglichst einfache Weise erfolgen können.

Diese Aufgabe wird erfindungsgemäß durch das im Anspruch 1 angegebene System gelöst. Die abhängigen Ansprüche 2 bis 13 zeigen spezielle Ausführungsformen des Systems gemäß Anspruch 1.

Erfindungsgemäß wird ein System für einen Informationsaustausch zwischen einer Bearbeitungsmaschine und einer Übergabevorrichtung zum Liefern von unbearbeiteten oder vorbearbeiteten Teilen oder Werkzeugen zu oder zum Holen der bearbeiteten Produkte oder von Werkzeugen von der Bearbeitungsmaschine zur Verfügung gestellt, wobei die Bearbeitungsmaschine eine Steuerung und eine Schnittstelle aufweist, wobei die Steuerung Bearbeitungszustände der Bearbeitungsmaschine überwacht und steuert und über die Schnittstelle Information über die Bearbeitungszustände der Bearbeitungsmaschine zu der Übergabevorrichtung zu deren Aktivierung ausgibt, welche Übergabevorrichtung die Information über eine ihr zugeordnete Schnittstelle empfängt und mittels einer ihr zugeordneten Steuerung verarbeitet und auf die Information reagiert. Als die Schnittstelle der Bearbeitungsmaschine wird insbesondere eine Druckerschnittstelle genutzt. Eine solche Schnittstelle ist bei Bearbeitungsmaschinen normalerweise zum Anschließen eines Druckers zum Drucken von Protokollen oder Prozessdaten vorgesehen und kann somit auch bei einer Nachrüstung einer Bearbeitungsmaschine mit einer Übergabevorrichtung ohne großen Aufwand zum Ausgeben von Information zu der Übergabevorrichtung zu deren Aktivierung verwendet werden.

Erfindungsgemäß wird somit die für einen Drucker vorgesehene Schnittstelle der Steuerung der Bearbeitungsmaschine verwendet, um Befehle zu "drucken" bzw. auszugeben. Eine Programmierung der vorhandenen Schnittstelle kann auf einfache Weise mittels ISO-Code erfolgen. Auf der Seite der Übergabevorrichtung erfolgt eine Aktivierung eines entsprechenden bestimmten Protokolls. Eine solche Schnittstelle ist vorteilhaft unabhängig von der Anzahl von Positionen für zu ladende Teile. Die Schnittstelle kann eine serielle Druckerschnittstelle, insbesondere eine RS 232/422-Schnittstelle, oder eine parallele Druckerschnittstelle, insbesondere eine Centronics-Schnittstelle, sein.

Die Information über die Bearbeitungszustände der Bearbeitungsmaschine weist vorzugsweise einen Wechselbefehl für ein Werkstück und/oder ein Werkzeug auf. Ein solcher Wechselbefehl weist vorzugsweise eine Magazinplatznummer und eine Positionierstelle für das Werkstück und/oder Werkzeug und/oder einen Schwenkvorgang für die Übergabevorrichtung auf. Eine solche Information ist die Information, die für einen Wechsel von Teilen an der Bearbeitungsmaschine nötig ist.

Insbesondere ist bei dem erfindungsgemäßen System weiterhin eine Synchronisiereinrichtung zum Abstimmen und schrittweisen Takten der Bearbeitungsmaschine und der Übergabevorrichtung vorgesehen. Diese Synchronisiereinrichtung weist vorzugsweise jeweils digitale Eingänge/Ausgänge der Bearbeitungsmaschine und der Übergabevorrichtung auf. Die Synchronisiereinrichtung wird insbesondere auch zur Rückführung einer Quittung in Reaktion auf eine ausgegebene Information bzw. einen ausgegebenen Wechselbefehl verwendet, was deshalb nötig ist, weil die Druckerschnittstelle unidirektional ist. Wie die Druckerschnittstelle sind auch digitale Eingänge/Ausgänge normalerweise bei Bearbeitungsmaschinen vorgesehen und lassen zu, dass Signale aus der Steuerung ausgegeben oder in diese eingelesen werden.

Eine Initiierung der Druckerschnittstelle der Bearbeitungsmaschine erfolgt vorzugsweise durch Laden eines Makros zur Ausgabe der Information zur Übergabevorrichtung und die Steuerung der Übergabevorrichtung reagiert dann beim Empfang von Information durch Aktivierung eines entsprechenden Protokolls. Wie es bereits angegeben ist, kann das Laden eines Makros auf einfache Weise durch Programmieren mittels ISO-Code durch einen Anwender einer Bearbeitungsmaschine durchgeführt werden.

Insbesondere führt die Übergabevorrichtung mittels ihrer Steuerung auf einen Empfang eines Wechselbefehls von der Druckerschnittstelle der Bearbeitungsmaschine hin einen Werkstück- oder Werkzeugwechsel gemäß dem Protokoll durch.

Weiterhin kann vorgesehen sein, dass die Bearbeitungsmaschine die Bereitschaft für einen Wechsel eines Werkstücks und/oder Werkzeugs über eine Ausgabe eines Signals an ihrem digitalen Ausgang anzeigt, das dem digitalen Eingang der Übergabevorrichtung zugeführt wird und das rückgesetzt wird, sobald die Bearbeitungsmaschine nicht mehr bereit für einen Wechsel ist. Es kann aber auch vorgesehen sein, dass die Steuerung der Bearbeitungsmaschine eine zyklisch wiederholte Ausgabe eines Wechselbefehls über die Druckerschnittstelle veranlasst. Durch diese Merkmale wird sichergestellt, dass dann, wenn die Bearbeitungsmaschine nicht mehr zu einem Wechsel bereit ist, der Wechselbefehl gelöscht wird. Dadurch wird die Sicherheit für die Bearbeitungsmaschine und auch die Übergabevorrichtung erhöht.

Vorzugsweise veranlasst die Steuerung der Bearbeitungsmaschine eine Ausgabe bzw. ein "Drucken" eines Wechselbefehls zusammen mit einer Prüfsumme über die Druckerschnittstelle. Durch die Prüfsumme wird die Datensicherheit der übermittelten Information erhöht.

Auf der Seite der Bearbeitungsmaschine ist ein Steuerschrank mit der Steuerung, der Druckerschnittstelle und den digitalen Eingängen/Ausgängen der Bearbeitungsmaschine vorgesehen, während auf der Seite der Übergabevorrichtung ein Steuerschrank mit der Steuerung, der Schnittstelle und den digitalen Eingängen/Ausgängen der Übergabevorrichtung vorgesehen ist. Dabei bilden der Steuerschrank der Bearbeitungsmaschine und der Steuerschrank der Übergabevorrichtung vorzugsweise eine Einheit, die an der Bearbeitungsmaschine oder der Übergabevorrichtung angebaut oder in diese eingebaut ist oder freistehend ist.

Die angegebenen und weitere Merkmale und Einzelheiten der Erfindung werden einem Fachmann auf dem Gebiet aus der folgenden detaillierten Beschreibung und den beigefügten Zeichnungen klarer, die Merkmale der vorliegenden Erfindung anhand eines Beispiels darstellen und wobei:
- Fig. 1: ein Blockschaltbild des erfindungsgemäßen Systems mit einer Bearbeitungsmaschine und einer Übergabevorrichtung zeigt; und
- Fig. 2: ein Ablaufdiagramm zum Erklären des Betriebs des erfindungsgemäßen Systems der Fig. 1 zeigt.

Im Folgenden wird die vorliegende Erfindung anhand einer bevorzugten Ausführungsform unter Bezugnahme auf die beigefügte Zeichnung detailliert erklärt.

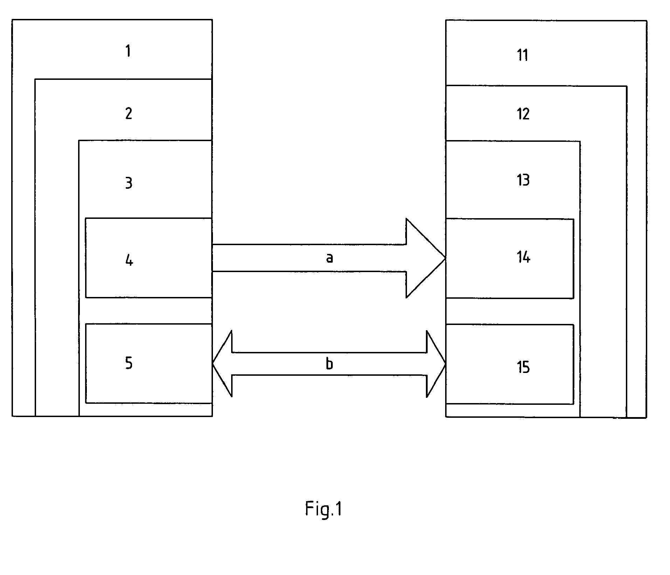

Fig. 1 zeigt ein Blockschaltbild eines Systems gemäß der vorliegenden Erfindung. Das System weist eine Bearbeitungsmaschine 1 und eine Übergabevorrichtung 11 auf. Die Bearbeitungsmaschine 1 kann eine Drehmaschine, eine Fräsmaschine, eine Senkerodiermaschine, eine Schneiderodiermaschine, etc. sein. Die Übergabevorrichtung 11 kann beispielsweise als ein Roboter zum Liefern von unbearbeiteten Teilen oder Werkzeugen zu oder zum Holen der bearbeiteten Produkte oder Werkzeuge von der Bearbeitungsmaschine 1 ausgebildet sein. Eine Abstimmung zwischen der Bearbeitungsmaschine 1 und der Übergabevorrichtung 11 erfolgt mittels eines Informationsaustauschs zwischen ihnen.

Ein Informationsaustausch zwischen der Bearbeitungsmaschine und der Übergabevorrichtung kann erfolgen, indem eine Sequenz mittels einer sequentiellen Schnittstelle abgearbeitet wird. Als solche Schnittstelle kann beispielsweise ein Profibus oder eine RS 232 / RS 422 - Schnittstelle unter Verwendung eines bestimmten Protokolls verwendet werden. Die Verwendung einer sequentiellen Schnittstelle hat den Vorteil, dass eine einfache und zuverlässige Verbindung erreichbar ist und dass keine Abhängigkeit von der Anzahl von Positionen für die Beladung von Teilen besteht. Allerdings ist es dabei nötig, die Software der Bearbeitungsmaschine anzupassen, was oft nur durch den Maschinenhersteller erfolgen kann. Insbesondere bei schon im Einsatz befindlichen Bearbeitungsmaschinen ist eine Anpassung der Maschinensoftware nicht auf einfache Weise oder überhaupt nicht mehr möglich.

Weiterhin gibt es die Möglichkeit, über digitale Ausgänge der Bearbeitungsmaschine logische Bitmuster zur erzeugen, die durch die Übergabevorrichtung zur Berechnung einer Position verwendet werden. Die Erzeugung von Bitmustern kann dabei durch einen Anwender durch eine einfache Programmierung mittels ISO-Code durchgeführt werden. Allerdings sind oft nicht genügend digitale Ausgänge an bereits bestehenden Bearbeitungsmaschinen vorhanden oder nachrüstbar. Die Anzahl der benötigten Ausgänge ist von der Größe eines Speichers der Übergabevorrichtung abhängig, in welchem ausgegebene Signale gespeichert werden.

Nachfolgend wird als Beispiel eine einfache Ausführungsform eines kommunizierenden Informationsaustauschs zwischen der Bearbeitungsmaschine und der Übergabevorrichtung gemäß der Lehre nach der vorliegenden Erfindung beschrieben.

Wie es in Fig. 1 zu sehen ist, gehört zu der Bearbeitungsmaschine 1 ein Steuerschrank 2 mit einer Steuerung 3, einer seriellen oder parallelen Druckerschnittstelle 4 und digitalen Eingängen/Ausgängen 5, während zu der Übergabevorrichtung 11 ein Steuerschrank 12 mit einer Steuerung 13, einer entsprechend der Druckerschnittstelle seriellen oder parallelen Schnittstelle 14 und digitalen Eingängen/Ausgängen 15 gehört. In der Praxis ist ein einziger Steuerschrank 2, 12 für sowohl die Bearbeitungsmaschine 1 als auch die Übergabevorrichtung 11 vorgesehen, der in der Regel an der Bearbeitungsmaschine 1 oder an der Übergabevorrichtung 11 angebaut oder eingebaut ist oder freistehend ist. Jedoch ist die in Fig. 1 gezeigte Darstellung von separaten Steuerschränken 2 und 12 zur Verdeutlichung der Zugehörigkeiten der jeweiligen Steuerungen 3 und 13, Schnittstellen 4 und 14 und digitalen Eingänge/Ausgänge 5 und 15 (normalerweise 24 V) zu jeweils der Bearbeitungsmaschine 1 und der Übergabevorrichtung 11 gewählt.

Weiterhin sind in Fig. 1 jeweilige Informationsflüsse oder Datenflüsse a und b zwischen den Schnittstellen 4 und 14 bzw. den digitalen Eingängen/Ausgängen 5 und 15 zu sehen.

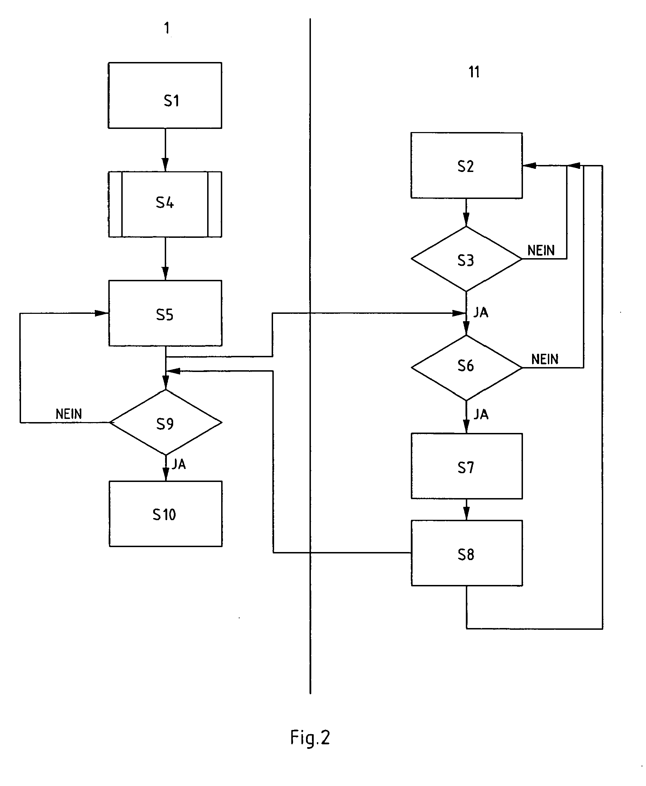

Der Informationsfluss a verläuft unidirektional von der Druckerschnittstelle 4 der Bearbeitungsmaschine 1 zu der Schnittstelle 14 der Übergabevorrichtung 11. Er enthält einen Befehl, der aufgrund seines Ursprungs in der Druckerschnittstelle 4 ein Druckbefehl ist und anzeigt, dass ein Teil, wie ein Werkstück oder ein Werkzeug, bei der Bearbeitungsmaschine 1 gewechselt werden soll. Diese Information bzw. der Wechselbefehl a zur Aktivierung der Übergabevorrichtung 11 wird über die Schnittstelle 14 der Übergabevorrichtung 11 von der Steuerung 13 der Übergabevorrichtung 11 aufgenommen und veranlasst dort, dass die Steuerung 13 der Übergabevorrichtung 11 ein Protokoll zum Durchführen verschiedener Arbeitsvorgänge aktiviert, die unter Bezugnahme auf die Fig. 2 detaillierter beschrieben werden.

Der Informationsfluss b verläuft in beiden Richtungen zwischen den digitalen Eingängen/Ausgängen 5 der Bearbeitungsmaschine 1 und den digitalen Eingängen/Ausgängen 15 der Übergabevorrichtung 11. Er enthält Signale zur Synchronisation der Bearbeitungsmaschine 1 und der Übergabevorrichtung 11, was auch unter Bezugnahme auf Fig. 2 detaillierter beschrieben wird.

Fig. 2 zeigt ein Ablaufdiagramm zum Erklären des Betriebs des erfindungsgemäßen Systems der Fig. 1. Das Ablaufdiagramm ist in zwei Teile aufgeteilt, die jeweils die Operationen auf der Seite der Bearbeitungsmaschine 1 bzw. auf der Seite der Übergabevorrichtung 11 darstellen.

Zuerst wird in einem Schritt S1 ein System mit einer Bearbeitungsmaschine 1 und einer Übergabevorrichtung 11 aktiviert. Dabei wird von einem Anwender ein spezielles Makro, das normalerweise ein ISO-Code ist, in die Steuerung 3 der Bearbeitungsmaschine 1 geladen, damit erreicht wird, dass die Steuerung 3, beispielsweise nach einer Beendigung eines an einem Werkstück durchgeführten Bearbeitungsvorgangs, veranlassen kann, dass die Druckerschnittstelle 4 einen "Druckbefehl" bzw. Information a zum Wechseln eines Werkstücks ausgibt, der bzw. die zu der Schnittstelle 14 der Übergabevorrichtung 11 übermittelt wird. Eine Ausgabe eines "Druckbefehls" a kann natürlich auch vor Beginn eines Bearbeitungsvorgangs erfolgen, um ein zu bearbeitendes Werkstück auf die Bearbeitungsmaschine 1 zu laden. Weiterhin kann natürlich auch ein "Druckbefehl" a zum Laden oder Wechseln von Werkzeugs ausgegeben werden.

Weiterhin erfolgt während des Schritts S1 ein Herstellen der Verbindungen zwischen der Bearbeitungsmaschine 1 und der Übergabevorrichtung 11 bei den jeweiligen Schnittstellen 4, 14 und digitalen Eingängen/Ausgängen 5, 15. Dies ist auf der Seite der Übergabevorrichtung 11 durch einen Schritt S2 gezeigt, der auch eine Wartezustand der Übergabevorrichtung 11 anzeigt. Weiterhin wird auf der Seite der Übergabevorrichtung 11 in einem Schritt S3 geprüft, ob das System aufgebaut worden ist oder nicht. Weiterhin kann in diesem Schritt S3 gemäß einer später beschriebenen zweiten Variante geprüft werden, ob die Bearbeitungsmaschine 1 in einem Bereitschaftszustand für einen Wechsel eines Werkstücks und/oder Werkzeugs ist oder nicht. Ist das Ergebnis der Prüfung NEIN, erfolgt ein Zurückgehen zu dem Wartezustand im Schritt S2. Anderenfalls geht dann, wenn das Ergebnis der Prüfung JA ist, der Ablauf auf der Seite der Übergabevorrichtung 11 weiter zu einem Schritt S6.

Nach dem Schritt S1 auf der Seite der Bearbeitungsmaschine 1 ist das System dazu vorbereitet, eine Beladung der Bearbeitungsmaschine 1 durch die Übergabevorrichtung 11 vorzunehmen, und geht der Ablauf auf der Seite der Bearbeitungsmaschine 1 weiter zu einem Schritt S4. In diesem Schritt S4 wird dann, wenn es seitens der Bearbeitungsmaschine 1 nötig ist, wie es von der Steuerung 3 der Bearbeitungsmaschine 1 bestimmt wird, von dieser Steuerung 3 der Bearbeitungsmaschine 1 ein Unterprogramm für einen "Wechsel" gestartet. Beim Start des Unterprogramms werden diesem vom Hauptprogramm beispielsweise die Parameter für eine Magazinplatznummer als Quelle für ein Werkstück bzw. ein Werkzeug, eine Positioniernummer als Ziel für ein Werkstück bzw. ein Werkzeug und möglicherweise eine Beschreibung eines Schwenkvorgangs für die Übergabevorrichtung übergeben. Nach dem Start des Unterprogramms geht der Ablauf auf der Seite der Bearbeitungsmaschine 1 weiter zu einem Schritt S5, in welchem die serielle oder parallele Druckerschnittstelle 4 der Bearbeitungsmaschine 1 einen "Druckbefehl", wie er zuvor beschrieben ist, zur seriellen oder parallelen Schnittstelle 14 der Übergabevorrichtung 11 ausgibt. Danach geht der Ablauf auf der Seite der Bearbeitungsmaschine 1 weiter zu einem Schritt S9, in welchem auf eine Bestätigung des durch den ausgegebenen "Druckbefehl" angeforderten Wechsels eines Werkstücks und/oder eines Werkzeugs gewartet wird.

Währenddessen wird auf der Seite der Übergabevorrichtung 11 im Schritt S6 geprüft, ob ein "Druckbefehl" bei der Schnittstelle 14 eingegangen ist oder nicht und ob dieser "Druckbefehl" gültig ist oder nicht. Die Gültigkeit des "Druckbefehls" kann dabei beispielsweise durch Übermitteln der Information im "Druckbefehl" zusammen mit einer Prüfsumme geprüft werden. Ist die Antwort im Schritt S6 NEIN, geht der Ablauf auf der Seite der Übergabevorrichtung 11 wieder zurück zum Wartezustand im Schritt S2. Ist die Antwort im Schritt S6 jedoch JA, geht der Ablauf auf der Seite der Übergabevorrichtung 11 weiter zu einem Schritt S7, in welchem ein durch den "Druckbefehl" angeforderter Wechsel eines Werkstücks und/oder eines Werkzeugs auf der Basis der im Schritt S3 an das Unterprogramm übergebenen Parameter, die oben beschrieben sind, ausgeführt wird.

Nach dem Schritt S7 geht der Ablauf auf der Seite der Übergabevorrichtung 11 weiter zu einem Schritt S8, in welchem die Ausführung eines Wechsels eines Werkstücks und/oder eines Werkzeugs für die Bearbeitungsmaschine 1 bestätigt wird. Diese Bestätigung erfolgt, da die Druckerschnittstelle 4 der Bearbeitungsmaschine 1 Signale nur in der Richtung von der Bearbeitungsmaschine 1 zu der Übergabevorrichtung 11 übermitteln kann, mittels einer Signalausgabe über einen digitalen Ausgang 15 der Übergabevorrichtung 11 zu einem digitalen Eingang 5 der Bearbeitungsmaschine 1.

Auf der Seite der Übergabevorrichtung 11 geht der Ablauf nach dem Schritt S8 zurück zu dem Wartezustand im Schritt S2, während auf der Seite der Bearbeitungsmaschine 1 im Schritt S9 eine Prüfung erfolgt, ob die Ausführung eines Wechsels eines Werkstücks und/oder eines Werkzeugs von der Übergabevorrichtung 11 bestätigt worden ist oder nicht. Ist die Antwort NEIN, geht der Ablauf auf der Seite der Bearbeitungsmaschine 1 gemäß einer später beschriebenen ersten Variante wieder zurück zu dem Schritt S5, in welchem ein "Druckbefehl" ausgegeben wird, oder wartet er gemäß der zweiten Variante, bis die Antwort JA wird. Ist die Antwort JA, geht der Ablauf auf der Seite der Bearbeitungsmaschine 1 weiter zu einem Schritt S10, in welchem das von der Bearbeitungsmaschine 1 ausgeführte Bearbeitungsprogramm gestartet wird, was bedeutet, dass das Unterprogramm verlassen wird und ein Rücksprung zum Hauptprogramm erfolgt.

Die erste und die zweite Variante, die vorangehend bereits angedeutet sind, beziehen sich auf den Fall, in welchem die Bearbeitungsmaschine nicht bereit für einen Wechsel eines Werkstücks und/oder Werkzeugs ist. In diesem bezüglich der Sicherheit des Systems relevanten Fall ist es erforderlich, dass ein Wechsel auf keinen Fall stattfindet, was bedeutet, dass der "Druckbefehl" bzw. ein Wechselbefehl gelöscht werden muss. Dies kann auf zweierlei Arten erfolgen.

Bei einer ersten Variante kann der "Druckbefehl" zyklisch durchlaufen werden, was gemäß der obigen Beschreibung dann erfolgt, wenn die Antwort im Schritt S9, in welchem auf eine Bestätigung einer Ausführung eines Wechsels eines Werkstücks und/oder eines Werkzeugs gewartet wird, NEIN ist.

Bei einer zweiten Variante kann, beispielsweise nach dem Aufruf des Unterprogramms im Schritt S4, an einem digitalen Ausgang 5 der Bearbeitungsmaschine 1 ein Signal zur Anzeige einer Bereitschaft für einen Wechsel gesetzt werden, das an einem digitalen Eingang 15 der Übergabevorrichtung 11 von der Steuerung 13 der Übergabevorrichtung 11 erkannt wird, wie es vorangehend bei der Beschreibung des Schritts S3 beschrieben ist, und durch diese Steuerung 3 zwischengespeichert werden. In diesem Fall muss im Schritt S8 nur auf eine Bestätigung einer Ausführung eines Wechsels eines Werkstücks und/oder eines Werkzeugs gewartet werden und ein nochmaliges Durchlaufen des Schritts S6 entfällt. Jedoch muss das Signal zur Anzeige einer Bereitschaft für einen Wechsel nach dem Erhalt der Bestätigung einer Ausführung eines Wechsels eines Werkstücks und/oder eines Werkzeugs im Schritt S8 (JA) am digitalen Ausgang 5 der Bearbeitungsmaschine 1 wieder rückgesetzt werden.

Der obige Ablauf ist für einen einzigen Wechsel eines Werkstücks und/oder Werkzeugs beschrieben worden. Ein solcher Wechsel kann gemäß dem erfindungsgemäßen System durch einfaches Aufrufen des Unterprogramms beispielsweise immer dann erfolgen, wenn ein Werkstück mittels eines Bearbeitungsprogramms fertig bearbeitet worden ist, so dass sich das Hauptprogramm (das Bearbeitungsprogramm) und das Unterprogramm abwechseln.

Erfindungsgemäß ist es auf einfache Weise möglich, eine Übergabevorrichtung zu einer Bearbeitungsmaschine hinzuzufügen und diese aufeinander abzustimmen, ohne große Änderungen an der Bearbeitungsmaschine durchführen zu müssen. Lediglich ein Laden eines Makros ist nötig, damit die Bearbeitungsmaschine "Wechselbefehle" zu der Übergabevorrichtung zu deren Aktivierung übermitteln kann.

## Patentansprüche

1. System für einen Informationsaustausch zwischen einer Bearbeitungsmaschine (1) und einer Übergabevorrichtung (11) zum Liefern von unbearbeiteten oder vorbearbeiteten Teilen oder Werkzeugen zu oder zum Holen der bearbeiteten Produkte oder von Werkzeugen von der Bearbeitungsmaschine (1), wobei die Bearbeitungsmaschine (1) eine Steuerung (3) und eine Schnittstelle (4) aufweist, wobei die Steuerung (3) Bearbeitungszustände der Bearbeitungsmaschine (1) überwacht und steuert und über die Schnittstelle (4) Information über die Bearbeitungszustände der Bearbeitungsmaschine (1) zu der Übergabevorrichtung (11) zu deren Aktivierung ausgibt, welche Übergabevorrichtung (11) die Information über eine ihr zugeordnete Schnittstelle (14) empfängt und mittels einer ihr zugeordneten Steuerung (13) verarbeitet und auf die Information reagiert, wobei eine Druckerschnittstelle als die Schnittstelle (4) der Bearbeitungsmaschine (1) genutzt wird.

2. System nach Anspruch 1, **dadurch gekennzeichnet, dass** die als die Schnittstelle (4) der Bearbeitungsmaschine (1) genutzte Druckerschnittstelle eine serielle Druckerschnittstelle, insbesondere eine RS 232/422-Schnittstelle, oder eine parallele Druckerschnittstelle, insbesondere eine Centronics-Schnittstelle ist.

3. System nach Anspruch 1 oder 2, **dadurch gekennzeichnet, dass** die Information über die Bearbeitungszustände der Bearbeitungsmaschine (1) einen Wechselbefehl für ein Werkstück und/oder Werkzeug aufweist.

4. System nach Anspruch 3, **dadurch gekennzeichnet, dass** der Wechselbefehl eine Magazinplatznummer und eine Positionierstelle für das Werkstück und/oder Werkzeug und/oder einen Schwenkvorgang für die Übergabevorrichtung (11) aufweist.

5. System nach einem der vorangehenden Ansprüche, **dadurch gekennzeichnet, dass** eine Synchronisiereinrichtung (5, 15) zum Abstimmen und schrittweisen Takten der Bearbeitungsmaschine (1) und der Übergabevorrichtung (11) vorgesehen ist.

6. System nach Anspruch 5, **dadurch gekennzeichnet, dass** die Synchronisiereinrichtung (5, 15) jeweils digitale Eingänge/Ausgänge (5, 15) der Bearbeitungsmaschine (1) und der Übergabevorrichtung (11) aufweist.

7. System nach einem der vorangehenden Ansprüche, **dadurch gekennzeichnet, dass** eine Initiierung der Druckerschnittstelle (4) der Bearbeitungsmaschine (1) durch Laden eines Makros zur Ausgabe der Information zur Übergabevorrichtung (11) erfolgt und die Steuerung (13) der Übergabevorrichtung (11) beim Empfang von Information durch Aktivierung eines entsprechenden Protokolls reagiert.

8. System nach Anspruch 7, **dadurch gekennzeichnet, dass** die Übergabevorrichtung (11) mittels ihrer Steuerung (13) auf einen Empfang eines Wechselbefehls von der Druckerschnittstelle (4) der Bearbeitungsmaschine (1) einen Werkstück- oder Werkzeugwechsel gemäß dem Protokoll durchführt.

9. System nach einem der Ansprüche 1 bis 8, **dadurch gekennzeichnet, dass** die Bearbeitungsmaschine (1) die Bereitschaft für einen Wechsel eines Werkstücks und/oder Werkzeugs über eine Ausgabe eines Signals an ihrem digitalen Ausgang (5) anzeigt, das dem digitalen Eingang (15) der Übergabevorrichtung (11) zugeführt wird und das rückgesetzt wird, sobald die Bearbeitungsmaschine (1) nicht mehr bereit für einen Wechsel ist.

10. System nach einem der Ansprüche 1 bis 7, **dadurch gekennzeichnet, dass** die Steuerung (3) der Bearbeitungsmaschine (1) eine zyklisch wiederholte Ausgabe eines Wechselbefehls über die Druckerschnittstelle (4) veranlasst.

11. System nach einem der vorangehenden Ansprüche, **dadurch gekennzeichnet, dass** die Steuerung (3) der Bearbeitungsmaschine (1) eine Ausgabe eines Wechselbefehls mit einer Prüfsumme über die Druckerschnittstelle (4) veranlasst.

12. System nach einem der vorangehenden Ansprüche, **dadurch gekennzeichnet, dass** auf der Seite der Bearbeitungsmaschine (1) ein Steuerschrank (2) mit der Steuerung (3), der Druckerschnittstelle (4) und den digitalen Eingängen/Ausgängen (5) vorgesehen ist, während auf der Seite der Übergabevorrichtung (11) ein Steuerschrank (12) mit der Steuerung (13), der Schnittstelle (14) und den digitalen Eingängen/Ausgängen (15) vorgesehen ist.

13. System nach Anspruch 12, **dadurch gekennzeichnet, dass** der Steuerschrank (2) der Bearbeitungsmaschine (1) und der Steuerschrank (2) der Übergabevorrichtung (11) eine Einheit bilden, die an der Bearbeitungsmaschine (1) oder der Übergabevorrichtung (11) angebaut, eingebaut oder freistehend ist.
